# EUROPÄISCHE PATENTANMELDUNG

(11) **EP 3 579 201 A1**
(43) Veröffentlichungstag der Anmeldung: **11.12.2019**
(21) Anmeldenummer: 18176165.1
(22) Anmeldetag: 05.06.2018
(51) Int. Cl.: G07C 9/00, H04W 52/02

(54) **ZUGANGSKONTROLLEINHEIT UND ZUGEHÖRIGES VERFAHREN**

(71) Anmelder: dormakaba Schweiz AG, 8620 Wetzikon (CH)
(72) Erfinder: MEIER, Tom, CH 8153 Rümlang (CH); DÜTSCHLER, Urs, CH 8153 Rümlang (CH); STUDERUS, Paul, Oberweningen 8165 (CH)
(74) Vertreter: Balder IP Law, S.L.

(57) **Zusammenfassung**

Die Steuereinheit (2) einer Zugangskontrolleinheit (1) ist dazu eingerichtet, eine Detektionseinheit zu (3) steuern, damit diese ein wiederholtes Aussenden eines Detektionssignals (10) ausführt, um zu detektieren, ob sich ein Objekt zur Zugangsidentifizierung (5) in einem Erfassungsbereich der Detektionseinheit (3) befindet. Zwischen dem Aussenden aufeinanderfolgender Detektionssignale (10) verstreicht ein Detektionsintervall (11) . Die Länge des Detektionsintervalls (11) wird abhängig davon dynamisch gesetzt, ob ein Objekt zur Zugangsidentifizierung (5) in dem Erfassungsbereich der Detektionseinheit (3) detektiert wurde und/oder mit welcher Häufigkeit ein Objekt zur Zugangsidentifizierung (5) in dem Erfassungsbereich der Detektionseinheit (3) detektiert wurde. Somit arbeitet die Zugangskontrolleinheit (1) mit möglichst geringem Stromverbrauch.

## Beschreibung

Die Erfindung betrifft eine Zugangskontrolleinheit für einen Zugang zu einem physischen Bereich, wobei die Zugangskontrolleinheit eine Steuereinheit und eine Detektionseinheit umfasst sowie ein zugehöriges Verfahren zum Betreiben einer Zugangskontrolleinheit.

Eine Zugangskontrolleinheit ist eine Vorrichtung, welche den Zugang zu einem bestimmten räumlichen Bereich, z. B. durch eine Tür verschlossenen Raum, regelt. Die Zugangskontrolleinheit ist insbesondere elektromechanisch ausgebildet.

Aus dem Stand der Technik sind elektromechanische Zugangskontrolleinheiten bekannt, bei denen eine Schlüsselkarte vor die Zugangskontrolleinheit gehalten werden muss, um eine Tür zu entriegeln. Dabei wird von der Zugangskontrolleinheit in regelmäßigen Abständen ein elektrisches Feld erzeugt. Basierend auf Änderungen in dem elektrischen Feld kann die Zugangskontrolleinheit darauf rückschließen, ob sich eine Schlüsselkarte vor der Zugangskontrolleinheit befindet und kann dementsprechend die Schlüsselkarte auslesen und entscheiden, ob die Tür entriegelt wird oder nicht.

In aktuellen Zugangskontrolleinheiten ist solch ein Zeitabstand zwischen dem Aussenden des elektrischen Feldes auf einen festen Wert gesetzt. So wird das elektrische Feld beispielsweise alle 250ms ausgesendet.

Es ist eine der Anforderungen, die an eine Zugangskontrolleinheit gestellt wird, dass diese mit möglichst geringem Stromverbrauch arbeitet. Somit wird beispielsweise ermöglicht, dass eine solche Zugangskontrolleinheit ohne eine Verbindung mit dem lokalen Stromnetz arbeiten kann. So ist es insbesondere oftmals schwierig, eine externe Stromzuführung zu einer Zugangskontrolleinheit zu führen, falls dieses beispielsweise in einem Türschloss integriert ist oder an einer Tür angeordnet ist. Daher arbeiten die aktuellen Zugangskontrolleinheiten häufig mit Batterien. Um eine geringe Wartung der Zugangskontrolleinheiten zu erreichen, ist es vorteilhaft, die Batteriestandzeit zu erhöhen.

Es ist daher die Aufgabe der Erfindung, eine Zugangskontrolleinheit für einen Zugang zu einem physischen Raum und ein Verfahren zum Betreiben einer derartigen Zugangskontrolleinheit zur Verfügung zu stellen, wobei die Zugangskontrolleinheit und/oder das Verfahren nur einen geringen elektrischen Stromverbrauch aufweist.

Die Aufgabe wird gelöst durch den unabhängigen Anspruch 1. Vorteilhafte Weiterbildungen der Zugangskontrolleinheit sind in den abhängigen Vorrichtungsansprüchen, der Beschreibung und in den Figuren angegeben. Ferner wird die Aufgabe auch durch die Merkmale des erfindungsgemäßen Verfahrens gemäß dem unabhängigen Anspruch 15 gelöst. Merkmale und Details, die in Zusammenhang mit der erfindungsgemäßen Zugangskontrolleinheit beschrieben sind, gelten dabei auch in Zusammenhang mit dem erfindungsgemäßen Verfahren und umgekehrt. Dabei können die in der Beschreibung und in den Ansprüchen erwähnten Merkmale jeweils einzeln für sich oder in Kombination erfindungswesentlich sein. Insbesondere wird eine Zugangskontrolleinheit unter Schutz gestellt, mit der das erfindungsgemäße Verfahren, insbesondere das Verfahren nach einem der Anspruch 15, ausführbar ist, wie auch ein Verfahren, das mit der erfindungsgemäßen Zugangskontrolleinheit, insbesondere mit einer Zugangskontrolleinheit nach einem der Ansprüche 1 bis 14, ausgeführt werden kann.

### Offenbarung der Erfindung

Die erfindungsgemäße Zugangskontrolleinheit umfasst eine Steuereinheit und eine Detektionseinheit. Die Steuereinheit ist dazu eingerichtet, die Detektionseinheit zu steuern, damit die Detektionseinheit ein wiederholtes Aussenden eines Detektionssignals ausführt, um zu detektieren, ob sich ein Objekt zur Zugangsidentifizierung in einem Erfassungsbereich der Detektionseinheit befindet, wobei zwischen dem Aussenden aufeinanderfolgender Detektionssignale ein Detektionsintervall verstreicht. Die Steuereinheit weist zumindest einen ersten Modus auf. In dem ersten Modus wird eine Länge des Detektionsintervalls abhängig davon dynamisch gesetzt, ob und/oder mit welcher Häufigkeit ein Objekt zur Zugangsidentifizierung in dem Erfassungsbereich der Detektionseinheit detektiert wurde.

Das erfindungsgemäße Verfahren zum Betreiben einer Zugangskontrolleinheit für einen Zugang zu einem physischen Bereich umfasst ein wiederholtes Aussenden eines Detektionssignals, um zu detektieren, ob sich ein Objekt zur Zugangsidentifizierung in einem Erfassungsbereich einer Detektionseinheit befindet, wobei zwischen dem Aussenden aufeinanderfolgender Detektionssignale ein Detektionsintervall verstreicht, wobei zumindest in einem ersten Modus eine Länge des Detektionsintervalls abhängig davon dynamisch gesetzt wird, ob und/oder mit welcher Häufigkeit ein Objekt zur Zugangsidentifizierung in dem Erfassungsbereich der Detektionseinheit detektiert wurde.

Der physische Bereich ist bevorzugt durch eine Barriere versperrt. Die Barriere kann als Tür, insbesondere als Gebäudetür, als Deckel, als Klappe, als Drehkreuz oder als Schranke ausgebildet sein. Die Tür kann z. B. als eine Drehtür, eine Schiebetür oder als eine Karusselltür ausgebildet sein.

Der physische Bereich ist insbesondere feststehend. Der physische Bereich kann als Raum oder als Box ausgebildet sein. Beispielsweise kann es sich bei dem physischen Bereich um eine durch eine Tür versperrter Raum handeln. Alternativ kann der physische Bereich als eine versperrte Box, insbesondere eine Postbox, als ein Schließfach, als ein Außenbereich oder als ein durch eine Schranke behinderter Bereich, z. B. Parkbereich, ausgebildet sein.

Die Zugangskontrolleinheit ist insbesondere dem physischen Bereich zugeordnet. Ein Benutzer wird insbesondere die Zugangskontrolleinheit dem physischen Bereich zuordnen. Die Zugangskontrolleinheit dient als insbesondere festinstallierter Wächter zu dem physischen Bereich. Die Zugangskontrolleinheit ist bevorzugt zur Anordnung nahe dem physischen Bereich vorgesehen.

Die Zugangskontrolleinheit kann eine elektromechanische Vorrichtung, z. B. einen Elektromotor oder ein Solenoid, oder eine elektromagnetische Vorrichtung, umfassen, mittels derer der Benutzer Zugang zu dem physischen Bereich erlangen kann. Beispielsweise kann die Zugangskontrolleinheit eine Handhabe umfassen, die mittels der elektromechanischen Vorrichtung mit einem Schloss wirkverbindbar ist. Alternativ kann die Zugangskontrolleinheit mittels der elektromechanischen Vorrichtung ein Riegelelement, insbesondere einen Riegel und/oder eine Falle, betätigen. In einer weiteren Alternative kann die Zugangskontrolleinheit mittels der elektromechanischen oder elektromagnetischen Vorrichtung eine Öffnung der Barriere, insbesondere der Tür, des Drehkreuzes oder der Schranke, zulassen. Die Zugangskontrolleinheit kann insbesondere als ein elektromechanischer Beschlag, als ein elektromechanischer Schließzylinder, als ein elektromechanischer Türöffner oder als ein Motorschloss ausgebildet sein. Besonders bevorzugt ist die Zugangskontrolleinheit als elektromechanischer Beschlag oder als elektromechanischer Schließzylinder ausgebildet. Die elektromechanische Vorrichtung kann dabei als eine Kupplungseinheit zur Herstellung der Wirkverbindung der Handhabe mit dem Schloss ausgebildet sein.

Alternativ kann die Zugangskontrolleinheit als ein Leser ausgebildet sein. Der Leser kann mit der elektromechanischen Vorrichtung kommunizieren, insbesondere ohne die elektromechanische oder elektromagnetischen Vorrichtung zu umfassen.

Die Entriegelung und/oder die Verriegelung der Barriere, insbesondere der Tür, kann insbesondere durch die Zugangskontrolleinheit gesteuert werden. Weiter bevorzugt umfasst die Zugangskontrolleinheit eine Schließeinheit, mittels welche die Tür verriegelt bzw. entriegelt werden kann.

Das Detektionssignal ist ein Signal, welches dazu geeignet ist, zu detektieren, ob sich ein Objekt zur Zugangsidentifizierung in einem Erfassungsbereich der Detektionseinheit befindet. Das Detektionssignal ist bevorzugt ein optisches oder ein elektromagnetisches Signal.

Das Detektieren, ob sich ein Objekt zur Zugangsidentifizierung in dem Erfassungsbereich einer Detektionseinheit befindet, erfolgt bevorzugt berührungslos. Das bedeutet, dass es nicht notwendig ist, dass ein mechanischer Kontakt zwischen der Detektionseinheit und dem Objekt zur Zugangsidentifizierung vorliegt, um es der Detektionseinheit zu ermöglichen, zu detektieren, ob sich das Objekt zur Zugangsidentifizierung in dem Erfassungsbereich befindet.

Zwischen dem Aussenden aufeinanderfolgender Detektionssignale verstreicht das Detektionsintervall. Ein einzelnes Detektionssignal kann ausreichend sein, um zu detektieren, ob sich ein Objekt zur Zugangsidentifizierung in dem Erfassungsbereich der Detektionseinheit befindet.

Das Objekt zur Zugangsidentifizierung erfüllt die Funktion eines Schlüssels. Dabei kann das Objekt zur Zugangsidentifizierung ein Transponder sein, der zumindest für eine kabellose Nahfeld-Kommunikation geeignet ist, z. B. ein RFID-oder BLE-Transponder. Der Transponder kann auch von einem Mobiltelefon oder einem mechanischen Schlüssel umfasst werden.

Bevorzugt kommunizieren das Objekt zur Zugangsidentifizierung und die Zugangskontrolleinheit, um festzustellen, ob das Objekt zur Zugangsidentifizierung berechtigt zum Zugang zu dem physischen Bereich ist. Bevorzugt kommunizieren das Objekt zur Zugangsidentifizierung und die Zugangskontrolleinheit hierzu kabellos. Besonders bevorzugt wird dieselbe Nahfeld-Kommunikation hierzu verwendet, wie zum Aussenden des Detektionssignals, z. B. RFID oder BLE (Bluetooth low energy). Die Zugangskontrolleinheit kann somit für die Kommunikation zur Feststellung der Berechtigung ausgebildet sein. Es ist denkbar, dass die Zugangskontrolleinheit, insbesondere die Steuereinheit, überprüfen kann, ob die Berechtigung vorliegt.

Das Objekt zur Zugangsidentifizierung kann eine Information zur Zugangsidentifizierung umfassen. Mittels der Information zur Zugangsidentifizierung kann die Zugangskontrolleinheit, insbesondere die Steuereinheit, feststellen, ob ein Zugang zu dem physischen Bereich gewährt werden soll.

Die Detektionseinheit kann als eine Sende- und/oder Empfangseinheit ausgebildet sein. Die Detektionseinheit kann eine Antenne umfassen.

Die Steuereinheit kann als eine elektronische Steuereinheit ausgebildet sein. Die Steuereinheit kann einen Controller umfassen. Insbesondere kann die Steuereinheit zumindest einen Prozessor und/oder zumindest einen Speicher, insbesondere einen nicht-flüchtigen Speicher, umfassen.

Die Steuereinheit weist zumindest einen ersten Modus auf, in dem die Länge des Detektionsintervalls dynamisch gesetzt wird. Das bedeutet, dass ein Zeitwert des Detektionsintervalls, also dessen Länge, veränderlich ist. Das Detektionsintervall kann durch die Steuereinheit auf unterschiedliche Werte gesetzt werden.

Das Setzen der Länge des Detektionsintervalls kann dabei davon abhängig sein, mit welcher Häufigkeit ein Objekt zur Zugangsidentifizierung in dem Erfassungsbereich der Detektionseinheit detektiert wurde. Eine Häufigkeit kann dabei eine Anzahl eines Auftretens eines Ereignisses innerhalb einer gewissen Zeitspanne sein. Dabei ist das Ereignis hier das Detektieren eines Objekts zur Zugangsidentifizierung in dem Erfassungsbereich. Die Länge des Detektionsintervalls ist abhängig davon, wie oft ein Objekt zur Zugangsidentifizierung innerhalb einer bestimmten Zeitspanne detektiert wurde. Die betrachtete Zeitspanne kann dabei variabel sein. Mit anderen Worten bedeutet dies, dass die Häufigkeit ein Wert ist, welcher darauf schließen lässt, wie oft die Zugangskontrolleinheit genutzt wird, also wie oft ein Objekt zur Zugangsidentifizierung in den Erfassungsbereich der Detektionseinheit gelangt.

Zusätzlich oder alternativ kann das Setzen der Länge des Detektionsintervalls kann dabei davon abhängig sein, ob ein Objekt zur Zugangsidentifizierung in dem Erfassungsbereich der Detektionseinheit detektiert wurde. So kann abhängig davon, ob überhaupt ein Objekt zur Zugangsidentifizierung in dem Erfassungsbereich der Detektionseinheit detektiert wurde, die Länge des Detektionsintervalls von der Steuereinheit verändert werden.

Die Steuereinheit kann dabei ausschließlich den ersten Modus aufweisen, kann aber optional auch weitere Modi aufweisen, in denen die Länge des Detektionsintervalls auf andere Weise gesetzt wird.

Die Steuereinheit ist eine Komponente der Zugangskontrolleinheit, welche zumindest dazu eingerichtet, die Detektionseinheit zu steuern. Es wird darauf hingewiesen, dass die Steuereinheit oder eine andere Komponente der Zugangskontrolleinheit bevorzugt dazu eingerichtet ist, die elektromechanische oder elektromagnetische Vorrichtung anzusteuern. Die elektromechanische oder elektromagnetische Vorrichtung ist dabei eine Vorrichtung, die hilft, eine der Zugangskontrolleinheit zugehörige Barriere, insbesondere Tür, öffenbar zu machen, insbesondere zu entriegeln. Dieses Ansteuern der elektromechanischen oder der elektromagnetischen Vorrichtung erfolgt insbesondere in Reaktion darauf, dass ein Objekt zur Zugangsidentifizierung in dem Erfassungsbereich detektiert wurde und das Objekt zur Zugangsidentifizierung ferner eine Information, insbesondere die Information zur Identifizierung, trägt, durch welche indiziert wird, dass ein Zugang gewährt werden soll.

Durch die erfindungsgemäße Zugangskontrolleinheit wird ermöglicht, dass die Detektionseinheit der Zugangskontrolleinheit und/oder eine zugehörige Logik besonders wenig Energie verbraucht, wodurch der Energieverbrauch der gesamten Zugangskontrolleinheit verringert wird. Dies erfolgt dadurch, dass die Länge des Detektionsintervalls dynamisch gesetzt wird. Dabei wird eine Länge des Detektionsintervalls bevorzugt immer dann auf einen niedrigen Wert gesetzt, wenn eine große Häufigkeit vorliegt und/oder eine große Häufigkeit zukünftig vermutet wird, mit der ein Objekt zur Zugangsidentifizierung in dem Erfassungsbereich der Detektionseinheit detektiert wurde. Zudem wird die Länge des Detektionsintervalls bevorzugt immer dann auf einen hohen Wert gesetzt, wenn eine niedrige Häufigkeit vorliegt und/oder eine niedrige Häufigkeit zukünftig vermutet wird, mit der ein Objekt zur Zugangsidentifizierung in dem Erfassungsbereich der Detektionseinheit detektiert wurde. Die Länge des Detektionsintervalls mit dem niedrigen Wert ist dabei kürzer als die Länge des Detektionsintervalls mit dem hohen Wert. Eine niedrige Häufigkeit umfasst dabei auch den Fall, dass kein Objekt zur Zugangsidentifizierung in der Zeitspanne ermittelt wurde.

Es wird somit erreicht, dass das Detektionssignal in einem kürzeren Detektionsintervall ausgesendet wird, wenn es wahrscheinlich ist, dass die Zugangskontrolleinheit häufiger genutzt wird. Gleichzeitig wird das Detektionsintervall auf einen höheren Wert gesetzt, wenn es wahrscheinlich ist, dass die Zugangskontrolleinheit vergleichsweise weniger häufig genutzt wird. Dies führt zwar dazu, dass eine Reaktionszeit der Zugangskontrolleinheit auf ein Vorliegen eines Objekts zur Zugangsidentifizierung in seltenen Fällen ansteigt, jedoch wird ein Energieverbrauch der Zugangskontrolleinheit, insbesondere der Detektionseinheit, gesenkt.

Die Unteransprüche definieren bevorzugte Weiterbildungen der Erfindung.

Es ist vorteilhaft, wenn die Steuereinheit dazu eingerichtet ist, eine Anzahl von detektierten Objekten zur Zugangsidentifizierung über einen vorgegebenen ersten Betriebszeitraum hinweg zu ermitteln und die Länge des Detektionsintervalls abhängig von der Anzahl der in dem vorgegebenen ersten Betriebszeitraum detektierten Objekte zur Zugangsidentifizierung zu setzen. Der Betriebszeitraum, über den hinweg die Anzahl von detektierten Objekten zur Zugangsidentifizierung ermittelt werden, wird als Ermittlungszeitraum bezeichnet. Die Länge des Ermittlungszeitraums kann in der Steuereinheit hinterlegt, insbesondere gespeichert, sein. Somit kann die Zeitspanne, in der eine Häufigkeit ein Objekt zur Zugangsidentifizierung in dem Erfassungsbereich detektiert wurde, fest vorgegeben sein.

So kann zunächst eine Häufigkeit ermittelt werden, in der das Objekt zur Zugangsidentifizierung in den Erfassungsbereich der Detektionseinheit detektiert wurde, wobei dieses Ermitteln über den ersten Betriebszeitraum hinweg erfolgt. Basierend auf den dabei ermittelten Wert wird die Länge des Detektionsintervalls für einen auf den ersten Betriebszeitraum folgenden zweiten Betriebszeitraum ermittelt. Die Anzahl der in dem Ermittlungszeitraum ermittelten Objekte zur Zugangsidentifizierung kann dabei auch Null betragen. Der zweite Betriebszeitraum kann sich unmittelbar an den ersten Betriebszeitraum oder zeitverzögert an den ersten Betriebszeitraum anschließen.

Auf diese Weise kann erreicht werden, dass eine zuverlässige Basis zum Ermitteln der Häufigkeit, in der ein Objekt zur Zugangsidentifizierung in dem Erfassungsbereich detektiert wird, geschaffen wird. Insbesondere eine Reaktion der Steuereinheit auf einzelne eintretende Ereignisse wird somit vermieden.

Es ist vorteilhaft, wenn ein dem ersten Betriebszeitraum zugehöriger zweiter Betriebszeitraum definiert ist, und die Steuereinheit dazu eingerichtet ist, die Länge des Detektionsintervalls in dem zweiten Betriebszeitraum abhängig von der Anzahl der in dem vorgegebenen ersten Betriebszeitraum detektierten Objekte zur Zugangsidentifizierung zu setzen. Somit können unterschiedliche Betriebszeiträume einander zugeordnet werden, wobei basierend auf einer in dem ersten Betriebszeitraum ermittelten Häufigkeit des Detektierens eines Objektes zur Zugangsidentifizierung das Detektionsintervall in dem zweiten Betriebszeitraum gesetzt wird.

Es kann eine logische Zuordnung erfolgen, wobei die logische Zuordnung typischerweise basierend darauf erfolgt, ob eine Nutzungshäufigkeit der Zugangskontrolleinheit in dem ersten Betriebszeitraum ähnlich einer zu erwartenden Nutzungshäufigkeit in dem zweiten Betriebszeitraum ist, wobei die Nutzungshäufigkeit der Häufigkeit entspricht, mit der ein Objekt zur Zugangsidentifizierung in dem Erfassungsbereich detektiert wird.

Zumindest eine Eigenschaft des zweiten Betriebszeitraum kann vorgegeben und/oder festgelegt sein. Die Eigenschaft des zweiten Betriebsraums kann insbesondere als die Länge des zweiten Betriebsraums und/oder als der Beginn des zweiten Betriebsraums, insbesondere den zeitlichen Abstand zum ersten Betriebsraum, ausgebildet sein. Die zumindest eine Eigenschaft des zweiten Betriebszeitraum kann in der Steuereinheit hinterlegt, insbesondere gespeichert, sein. Der Ermittlungszeitraum und der zweite Betriebsraum können insbesondere dieselbe Länge haben.

Die Steuereinheit kann insbesondere einen Timer zur Ermittlung eines Zeitraums, insbesondere des ersten und/oder zweiten Betriebszeitraums, umfassen.

Der zweite Betriebszeitraum kann eine vorgegebene Länge umfassen. Die Länge kann in der Steuereinheit hinterlegt sein.

Alternativ kann der zweite Betriebszeitraum kein vordefiniertes, festes Ende umfassen. Vielmehr kann der zweite Betriebszeitraum mit einer variablen Länge ausgebildet sein. Der zweite Betriebszeitraum kann z. B. durch ein Ereignis, wie die Detektion eines Objekts zur Zugangsidentifizierung oder einer vorgegebenen Anzahl von Objekten zur Zugangsidentifizierung, enden. Es ist denkbar, dass der zweite Betriebszeitraum eine vorgegebene maximale Länge aufweist. Die maximale Länge kann in der Steuereinheit hinterlegt sein. Alternativ kann der zweite Betriebszeitraum keine maximale Länge umfassen. Der zweite Betriebszeitraum kann somit nur durch ein Ereignis, wie die Detektion eines Objekts zur Zugangsidentifizierung oder das Beenden des ersten Modus, enden.

Die Steuereinheit kann dazu eingerichtet sein, die Länge des Detektionsintervalls zu vergrößern, wenn über eine Zeitspanne, insbesondere über einen Ermittlungszeitraum, hinweg weniger als eine vordefinierte Anzahl von Objekten zur Zugangsidentifizierung durch die Detektionseinheit detektiert wurde. Die vordefinierte Anzahl von Objekten zur Zugangsidentifizierung kann in der Steuereinheit hinterlegt, insbesondere gespeichert, sein. Die zu vergrößernde Länge des Detektionsintervalls kann in der Steuereinheit hinterlegt sein.

Bevorzugt ist die Steuereinheit dazu eingerichtet, die Länge des Detektionsintervalls zu vergrößern, wenn über eine Zeitspanne, insbesondere einem Ermittlungszeitraum, hinweg kein Objekt zur Zugangsidentifizierung durch die Detektionseinheit detektiert wurde. Das bedeutet insbesondere, dass über den vorgegebenen Ermittlungszeitraum hinweg geprüft wird, ob ein Objekt zur Zugangsidentifizierung durch die Detektionseinheit detektiert wurde. Ist dies nicht der Fall, so wird die Länge des Detektionsintervalls vergrößert, also verlängert. Die Länge des Detektionsintervalls wird somit in Reaktion darauf gesetzt, ob über einen vorgegebenen Ermittlungszeitraum hinweg kein Objekt zur Zugangsidentifizierung durch die Detektionseinheit detektiert wurde. Der Faktor, dass über einen vorgegebenen Ermittlungszeitraum hinweg kein Objekt zur Zugangsidentifizierung detektiert wurde, bedeutet, dass eine Häufigkeit, in der ein Objekt in dem Erfassungsbereich der Detektionseinheit detektiert wurde, gering ist. Somit wird die Länge des Detektionsintervalls vergrößert. Durch ein solches Vergrößern des Detektionsintervalls kann die Länge des Detektionsintervalls unmittelbar in Reaktion auf eine aktuelle Benutzungssituation der Zugangskontrolleinheit gesetzt werden. Das Detektionsintervall kann somit sehr schnell und auf einfache Weise angepasst werden.

Es kann sein, dass, wenn innerhalb des vorgegebenen Ermittlungszeitraums ein Objekt zur Zugangsidentifizierung durch die Detektionseinheit detektiert wurde, die Länge des Detektionsintervalls bevorzugt verringert oder unverändert beibehalten wird.

Die Steuereinheit kann dazu eingerichtet sein, die Länge des Detektionsintervalls schrittweise zu vergrößern, wobei die Länge des Detektionsintervalls jeweils dann vergrößert wird, wenn eine zugehörige Zeitspanne, insbesondere ein Ermittlungszeitraum, verstrichen ist, in dem weniger als eine vordefinierte Anzahl von Objekten zur Zugangsidentifizierung durch die Detektionseinheit detektiert wurde.

Bevorzugt ist die Steuereinheit dazu eingerichtet ist, die Länge des Detektionsintervalls schrittweise zu vergrößern, wobei die Länge des Detektionsintervalls jeweils dann vergrößert wird, wenn eine Zeitspanne, insbesondere ein vorgegebener zugehöriger Ermittlungszeitraum, verstrichen ist, in dem kein Objekt zur Zugangsidentifizierung, durch die Detektionseinheit detektiert wurde. So wird das Detektionsintervalls insbesondere dann vergrößert, wenn in der Zeitspanne, insbesondere in dem Ermittlungszeitraum, kein Objekt zur Zugangsidentifizierung durch die Detektionseinheit detektiert wurde und wird erneut vergrößert, wenn in einer zweiten Zeitspanne, insbesondere in einem zweiten Ermittlungszeitraum, die bzw. der auf die erste Zeitspanne, insbesondere auf den ersten Ermittlungszeitraum, folgt, erneut kein Objekt zur Zugangsidentifizierung durch die Detektionseinheit detektiert wurde. Dadurch kann die Steuereinheit schrittweise an ein aktuelles Szenario im Umfeld der Zugangskontrolleinheit angepasst werden. So wird das Detektionsintervall beispielsweise schrittweise vergrößert, wenn die Zugangskontrolleinheit überhaupt nicht genutzt wird. So kann insbesondere in besonders langen Zeitabständen, in denen keine Nutzung der Zugangskontrolleinheit erfolgt, wesentlich Energie eingespart werden.

Die Steuereinheit kann dazu eingerichtet sein, in einem Ermittlungszeitraum die Anzahl der Objekte zur Zugangsidentifizierung zu ermitteln, wobei abhängig von der Anzahl der in dem ersten Ermittlungszeitraum ermittelten Objekten in einem Überdeckungszeitraum das Detektionsintervall gegenüber dem Detektionsintervall im Ermittlungszeitraum verändert, insbesondere vergrößert, ist. In dem Überdeckungszeitraum werden die Anzahl der Objekte zur Zugangsidentifizierung ermittelt. Abhängig von der Anzahl der in dem Überdeckungszeitraum ermittelten Objekten kann in einem weiteren Betriebszeitraum das Detektionsintervall gegenüber dem Detektionsintervall im Überdeckungszeitraum verändert, insbesondere vergrößert, sein. Hierdurch kann schrittweise das Detektionsintervall verändert werden. Insbesondere können sich der Ermittlungszeitraum und der Überdeckungszeitraum unmittelbar aneinander anschließen. Es ist denkbar, mehrere Überdeckungszeiträume vorzusehen.

Der Überdeckungszeitraum kann eine vorgegebene Länge umfassen. Die Länge kann in der Steuereinheit hinterlegt sein.

Alternativ kann der Überdeckungszeitraum kein vordefiniertes Ende umfassen. Vielmehr kann der Überdeckungszeitraum mit einer variablen Länge ausgebildet sein. Der Überdeckungszeitraum kann z. B. durch ein Ereignis, wie die Detektion eines Objekts zur Zugangsidentifizierung oder einer vorgegebenen Anzahl von Objekten zur Zugangsidentifizierung, enden. Es ist denkbar, dass der Überdeckungszeitraum eine vorgegebene maximale Länge aufweist. Die maximale Länge kann in der Steuereinheit hinterlegt sein.

Der zweite Betriebszeitraum kann dem Überdeckungszeitraum entsprechen. Alternativ kann der zweite Betriebszeitraum einem Umsetzungszeitraum entsprechen. In dem Umsetzungszeitraum wird bevorzugt die Anzahl der Objekte über den Umsetzungszeitraum nicht ermittelt. Hierdurch kann Energie eingespart werden.

Weiter bevorzugt ist die Steuereinheit dazu eingerichtet ist, die Länge des Detektionsintervalls zu verringern, wenn ein Objekt zur Zugangsidentifizierung durch die Detektionseinheit detektiert wurde. Das bedeutet, dass die Länge des Detektionsintervalls in Reaktion darauf verringert wird, ob ein Objekt zur Zugangsidentifizierung durch die Detektionseinheit detektiert wird. Es liegt somit für eine kurze betrachtete Zeitspanne eine große Häufigkeit vor, mit der ein Objekt zur Zugangsidentifizierung in dem Erfassungsbereich der Detektionseinheit detektiert wurde. Daraus kann darauf geschlossen werden, dass die Zugangskontrolleinheit mit erhöhter Frequenz, hier also häufiger, genutzt werden soll. Das Verringern des Detektionsintervalls in diesem Szenario ist vorteilhaft, weil eine Reaktionszeit der Zugangskontrolleinheit auf das Einbringen des Objekts zur Zugangsidentifizierung in den Erfassungsbereich verkürzt wird.

Auch ist es vorteilhaft, wenn die Steuereinheit dazu eingerichtet ist, die Länge des Detektionsintervalls auf einen vordefinierten Anfangswert zurückzusetzen, wenn ein Objekt zur Zugangsidentifizierung durch die Detektionseinheit detektiert wurde. Die Länge des Detektionsintervalls wird somit in Reaktion darauf, ob ein Objekt zur Zugangsidentifizierung durch die Detektionseinheit detektiert wurde, auf den vordefinierten Anfangswert zurückgesetzt. Somit kann die Steuereinheit schon bei einmaliger Nutzung der Zugangskontrolleinheit auf ein Detektionsintervall eingestellt werden, welches dem vordefinierten Anfangswert entspricht. Dies ist beispielsweise dann vorteilhaft, wenn die Steuereinheit das Detektionsintervall über einen längeren Zeitraum hinweg auf einen hohen Wert gesetzt hat, es dann jedoch wieder zu einer Nutzung der Zugangskontrolleinheit kommt. So kann es dabei zwar in einem ungünstigen Fall bei der ersten Benutzung der Zugangskontrolleinheit nach längerer Pause zu einer Verzögerung kommen, da das Detektionsintervall groß ist, jede weitere Nutzung erfolgt jedoch wieder reaktionsschnell. Der vordefinierte Anfangswert kann in der Steuereinheit hinterlegt sein.

Die Steuereinheit kann dazu eingerichtet sein, die Länge des Detektionsintervalls für das nächste Detektionsintervall zu verringern und/oder auf einen vordefinierten Anfangswert für das nächste Detektionsintervall zurückzusetzen, wenn ein Objekt der Zugangsidentifizierung durch die Detektionseinheit detektiert wurde. Somit reagiert die Steuereinheit unmittelbar darauf, dass ein Benutzer Zugang zu dem physischen Bereich erlangt. Die Steuereinheit passt unmittelbar für den nächsten Benutzer das Detektionsintervall an. Insbesondere kann mit der Veränderung des Detektionsintervalls ein Ermittlungszeitraum beginnen.

Auch ist es vorteilhaft, wenn die Steuereinheit dazu eingerichtet ist, die Länge des Detektionsintervalls zu verringern oder auf einen vordefinierten Anfangswert zurückzusetzen, wenn mehr als eine vordefinierte Anzahl von einem Objekt zur Zugangsidentifizierung über einen Ermittlungszeitraum durch die Detektionseinheit detektiert wurde. Die vordefinierte Anzahl kann in der Steuereinheit hinterlegt sein. Die Länge des zu verringernden Detektionsintervalls kann in der Steuereinheit hinterlegt sein.

Insbesondere kann in der Steuereinheit eine Zuordnung hinterlegt sein, zu welcher Anzahl der detektierten Objekte zur Zugangsidentifizierung im Ermittlungszeitraum welche Länge des Detektionsintervalls, insbesondere im zweiten Betriebszeitraum, gehört. Hierbei können Längen potentieller Detektionsintervalle Obergrenzen und/oder Untergrenzen von Anzahlen der detektierten Objekte zur Zugangsidentifizierung zugeordnet sein.

Der zweite Betriebszeitraum kann sich unmittelbar an den Ermittlungszeitraum anschließen.

Alternativ kann der Ermittlungszeitraum ein Zeitraum eines Wochentages einer ersten Woche und der zweite Betriebszeitraum der entsprechende Zeitraum des darauffolgenden Wochentages oder des gleichen Wochentages einer auf die erste Woche folgenden zweiten Woche sein. In einfachen Worten bedeutet dies, dass beispielsweise der Ermittlungszeitraum ein Dienstag Nachmittag, ist und der zweite Betriebszeitraum ein Mittwoch Nachmittag oder ein Dienstag Nachmittag der Folgewoche ist. Dieser Auswahl des Ermittlungszeitraums und des zugehörigen zweiten Betriebszeitraums liegt die Erkenntnis zugrunde, dass eine Zugangskontrolleinheit typischerweise in aufeinanderfolgenden Tagen oder an Tagen aufeinanderfolgenden Wochen mit ähnlicher Häufigkeit genutzt wird. So wird eine Zugangskontrolleinheit oftmals wochentags öfter genutzt als am Wochenende. Eine solche Steuereinheit ist also besonders dazu geeignet, eine Energieersparnis zu maximieren. Insbesondere für diesen Fall umfasst der zweite Betriebszeitraum eine vorgegebene Länge. Besonders bevorzugt haben der Ermittlungszeitraum und der zweite Betriebszeitraum können insbesondere dieselbe Länge.

Ferner ist es vorteilhaft, wenn die Steuereinheit einen zusätzlichen zweiten Modus aufweist, in dem die Länge des Detektionsintervalls auf einen festen Wert gesetzt ist. Die Auswahl des zweiten Modus erfolgt bevorzugt durch eine Benutzerauswahl. Dies erfolgt bevorzugt mittels eines Einstellschalters oder mittels der Detektionseinheit, zum Beispiel, in dem ein Objekt zur Zugangsidentifizierung mit einem bestimmten Code von der Detektionseinheit detektiert wird. Auf diese Weise kann das die die Steuereinheit und somit die zugehörige Zugangskontrolleinheit auf einfache Weise an besondere Ereignisse angepasst werden, in denen die Häufigkeit, in der ein Objekt zur Zugangsidentifizierung in dem Erfassungsbereich detektiert wird, auf andere Weise vorhergesagt werden kann, beispielsweise falls ein angekündigtes Ereignis eine häufige Wahrscheinlichkeit der Nutzung der Zugangskontrolleinheit erahnen lässt. Es ist auch denkbar, in den zweiten Modus zu gelangen, in dem die Zugangskontrolleinheit einen Befehl zum Übergang in den zweiten Modus von dem Objekt zur Zugangsidentifizierung empfängt. Die Zugangskontrolleinheit kann eine Länge des im zweiten Modus festgelegten Detektionsintervalls von dem Objekt zur Zugangsidentifizierung empfangen. Die Steuereinheit kann die eine Länge des im zweiten Modus festgelegten Detektionsintervalls speichern.

Die Steuereinheit kann dazu ausgebildet sein, innerhalb einer Versuchszeitspanne, insbesondere einem Tag oder einer Woche, die Anzahl der detektierten Objekte zumindest innerhalb eines Ermittlungszeitraums zu detektieren, und nach der Versuchszeitspanne die Länge des Detektionsintervalls für den dem Ermittlungszeitraum zugeordneten zweiten Betriebszeitraum auf einen festen Wert zu setzen. Der feste Wert richtet sich nach der Anzahl der detektierten Objekte im Ermittlungszeitraum. Der feste Werte wird in der Steuereinheit gespeichert.
Somit wird nur für eine Versuchszeitspanne Anzahl der detektierten Objekte ermittelt und danach abhängig von dem Ergebnis der Ermittlung die Länge des Detektionsintervalls festgelegt. Das Detektionsintervall ist insbesondere für die Dauer des ersten Modus festgelegt. Dieses spart Energie, da auch die Ermittlung der Anzahl der detektierten Objekte Energie verbraucht.

Insbesondere können innerhalb der Versuchszeitspanne die Anzahl der detektierten Objekte in mehreren Ermittlungszeiträumen detektiert werden und jeweils zumindest ein zweiten Betriebszeitraum einem Ermittlungszeitraum zugeordnet sein, wobei nach der Versuchszeitspanne das jeweilige Detektionsintervall des jeweiligen für einem Ermittlungszeitraum zugeordneten zweiten Betriebszeitraums auf einen festen Wert gesetzt ist. Die festen Werte richten sich nach der Anzahl der detektierten Objekte in den Ermittlungszeiträumen. Die festen Werte werden in der Steuereinheit gespeichert. Die Detektionsintervalle sind insbesondere für die Dauer des ersten Modus festgelegt.

Die Erfindung wird nun anhand mehrerer Ausführungsbeispiele näher beschrieben. Dabei zeigen:
- Fig. 1: eine beispielhafte Zugangskontrolleinheit, welche eine erfindungsgemäße Steuereinheit umfasst,
- Fig. 2: ein erstes beispielhaftes Zeitdiagramm zur Erläuterung des dynamischen Setzens des Detektionsintervalls gemäß einer ersten Ausführungsform der Erfindung, und
- Fig. 3: ein zweites beispielhaftes Zeitdiagramm zur Erläuterung des dynamischen Setzens des Detektionsintervalls gemäß der ersten Ausführungsform der Erfindung.

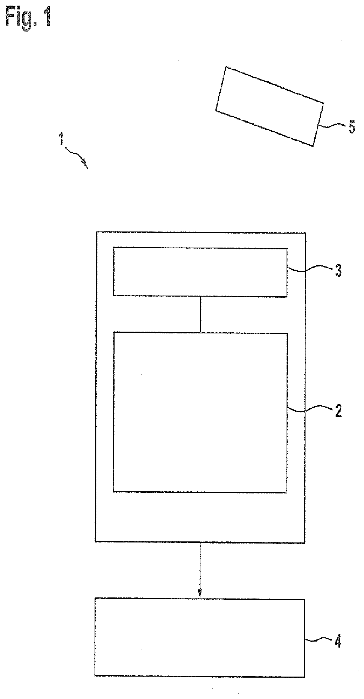

Fig. 1 zeigt eine Zugangskontrolleinheit 1, welche eine erfindungsgemäße Steuereinheit 2 umfasst. Die Zugangskontrolleinheit 1 umfasst ferner eine Detektionseinheit 3 und eine elektromechanische Vorrichtung 4.

Die Zugangskontrolleinheit 1 ist beispielsweise an einer zugehörigen Türe eines Gebäudes angeordnet und ermöglicht es, die Türe mittels der elektromechanischen Vorrichtung 4 zu öffenbar zu machen, insbesondere zu entriegeln. Die Tür kann dann von einem Benutzer geöffnet werden, wenn von der Steuereinheit 2 ein entsprechendes Signal an die elektromechanische Vorrichtung 4 übermittelt wird. Die Zugangskontrolleinheit 1 ist bevorzugt an einem Türblatt und/oder an einem Türrahmen der Tür angeordnet. Die elektromechanische Vorrichtung 4 ist z. B. als eine Kupplungseinheit ausgebildet, die eine Handhabe, mit dem ein Benutzer eine Tür öffnen kann, mit einem Türschloss verbinden kann. In einem entkuppelten Zustand der Kupplungseinheit sind die Handhabe und das Türschloss nicht wirkverbunden miteinander. In einem Kupplungszustand der Kupplungseinheit sind die Handhabe und das Türschloss miteinander wirkverbunden.

Die Detektionseinheit 3 ist ein Sende- und/oder Empfangseinheit. Die Detektionseinheit 3 kann als ein Funkmodul ausgebildet sein. Die Detektionseinheit 3 ist dabei ein Sende- und/oder Empfangseinheit für eine kabellose Kommunikation, insbesondere RFID oder BLE oder eine weitere Nahfeldkommunikation. Durch die Detektionseinheit 3 können somit beispielsweise Informationen von einem elektronischen Schlüssel, insbesondere einer Schlüsselkarte, einem Schlüsselanhänger, einem Badge, einem Schlüssel mit einem Schlüsselschaft, oder einem anderen Objekt zur Zugangsidentifizierung, beispielsweise einem Mobilfunktelefon, ausgelesen werden. Das Objekt zur Zugangsidentifizierung 5 ist somit ein elektronischer Schlüssel für die Tür. Wird von der Detektionseinheit 3 detektiert, dass sich ein Objekt zur Zugangsidentifizierung 5 in einem Erfassungsbereich der Detektionseinheit 3 befindet, sich also hinreichend nah an der Detektionseinheit 3 befindet, damit dieses von der Detektionseinheit 3 ausgelesen werden kann, so werden Informationen zur Zugangsidentifizierung von dem Objekt zur Zugangsidentifizierung 5 zu der Detektionseinheit 3 übertragen und von dieser an die Steuereinheit 2 weitergegeben. Durch die Steuereinheit 2 wird basierend auf den empfangenen Informationen entschieden, ob das Signal an die elektromechanische Vorrichtung 4 übermittelt wird, um eine Öffnung der Tür durch den Benutzer zu ermöglichen, z. B. indem die Kupplungseinheit von dem entkuppelten Zustand in den Kupplungszustand überführt wird.

Da es gewünscht ist, dass von dem Objekt zur Zugangsidentifizierung 5 nicht beständig Funksignale ausgesendet werden oder da dies insbesondere bei RFID-Techniken nicht möglich ist, wird die Kommunikation zwischen der Detektionseinheit 3 und dem Objekt zur Zugangsidentifizierung 5 durch die Detektionseinheit 3 ausgelöst. Dies erfolgt dadurch, dass eine Detektionssignal 10 ausgesendet wird. So wird beispielsweise von der Detektionseinheit 3 ein elektromagnetisches Feld als Detektionssignal bereitgestellt, durch welches eine Kommunikation mit einem dem Objekt zur Zugangsidentifizierung 5 ausgelöst wird. Beispielsweise kann auch ein RFID Chip hierdurch mit Energie versorgt werden. Um Energie zu sparen, ist es erstrebenswert, dass dieses Detektionssignal 10 möglichst selten ausgesandt wird. Zudem ist es jedoch ebenso erstrebenswert, dass eine möglichst kurze Pause vorliegt, sobald ein Objekt zur Zugangsidentifizierung 5 in den Erfassungsbereich der Detektionseinheit 3 bewegt wird, damit es für einen Anwender nicht zu unnötigen Wartezeiten kommt, bevor die Türe geöffnet werden kann.

Die Steuereinheit 2 steuert die Detektionseinheit 3 daher dazu an, dass diese ein wiederholtes Aussenden des Detektionssignals 10 ausführt, damit detektiert werden kann, ob sich ein Objekt zur Zugangsidentifizierung 5 in dem Erfassungsbereich der Detektionseinheit 3 befindet. Das wiederholte Aussenden des Detektionssignals 10 erfolgt in einer bestimmten Frequenz. Somit liegt zwischen dem Aussenden aufeinanderfolgender Detektionssignale 10 ein Detektionsintervall 11. Das Detektionsintervall 11 wird oftmals auch als "Object in Field"-Intervall, auch OIF-Intervall, bezeichnet. Das Detektionsintervall ist der Steuereinheit 2 gespeichert.

Die Steuereinheit 2 weist zumindest einen ersten Modus auf, in dem eine Länge des Detektionsintervalls 11 abhängig davon dynamisch gesetzt wird, ob ein Objekt zur Zugangsidentifizierung 5 in dem Erfassungsbereich der Detektionseinheit 3 detektiert wurde oder mit welcher Häufigkeit ein Objekt zur Zugangsidentifizierung 5 in dem Erfassungsbereich der Detektionseinheit 3 detektiert wurde.

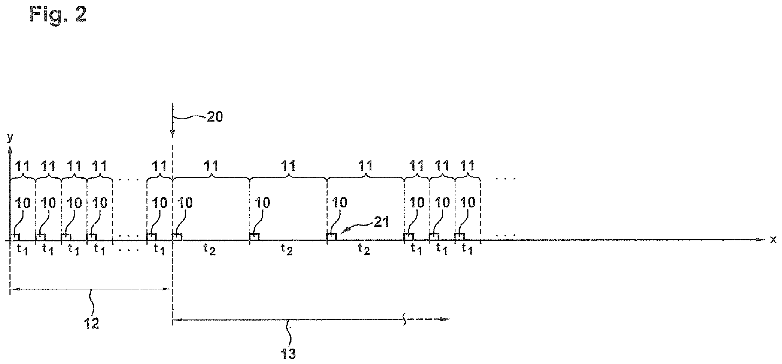

Fig. 2 zeigt ein erstes beispielhaftes Zeitdiagramm zur Erläuterung des dynamischen Setzens des Detektionsintervalls gemäß einer ersten Ausführungsform der Erfindung. Bei der ersten Ausführungsform der Erfindung wird durch die Steuereinheit 2 die Länge des Detektionsintervalls 11 in Reaktion darauf vergrößert, dass über einen vorgegebenen ersten Zeitraum 12 hinweg kein Objekt zur Zugangsidentifizierung 5 durch die Detektionseinheit 3 detektiert wurde. Der erste Zeitraum 12 dient als Ermittlungszeitraum 12. Der erste vorgegebene Zeitraum 12 kann z. B. als eine Stunde definiert sein. Die Länge des Zeitraums 12 ist in der Steuereinheit 2 hinterlegt. Die Steuereinheit 2 umfasst einen Timer zur Ermittlung, wann der Zeitraum 12 abgelaufen ist. Das Detektionsintervall 11 hat beispielsweise einen Anfangswert, der z. B. eine Länge von 250ms hat. Das bedeutet, dass alle 250ms ein Detektionssignal 10 von der Detektionseinheit 3 ausgesendet wird. Das Detektionssignal 10 selbst hat eine zeitliche Länge, die kürzer als das Detektionsintervall 11 ist. Somit wird das Detektionssignal 10 nicht über das gesamte Detektionsintervall 11 hinweg ausgesendet, sondern nur in einem zeitlichen Teilbereich des Detektionsintervalls 11.

Mit Bezug auf Fig. 2 ist in einer x-Achse eine Zeitachse dargestellt und in einer y-Achse eine Signalstärke des Detektionssignals 10 dargestellt. Es ist ersichtlich, dass die zeitlich ersten Detektionsintervalle 11 in Fig. 2 eine erste Zeitdauer t1 aufweisen. Jeweils nach einem Ablauf eines Detektionsintervalls 11 wird das Detektionssignal 10 von der Detektionseinheit 3 ausgesendet. Somit wird zunächst nach jeder ersten Zeitdauer t1 das Detektionssignal 10 von der Detektionseinheit 3 ausgesendet. Das Detektionsintervall 11 hat dabei zunächst einen Anfangswert, welcher die erste Zeitdauer t1 von z. B. 250ms aufweist. Die Zeitdauer t1 kann auch als Länge des Detektionsintervalls 11 bezeichnet werden.

Ferner ist in Fig. 2 der erste Zeitraum 12 dargestellt, welcher durch den in der Steuereinheit 2 gestarteten Timer ermittelt wird. Innerhalb des ersten Zeitraums 12 wird eine Vielzahl von Detektionsintervallen 11 durchlaufen. Ist der erste Zeitraum 12 verstrichen, ohne dass in diesem ersten Zeitraum ein Objekt zur Zugangsidentifizierung 5 durch die Detektionseinheit 3 detektiert wurde, so wird die Länge des Detektionsintervalls 11 vergrößert. Dies ist gemäß Fig. 2 an einem Ablaufzeitpunkt 20 des ersten Zeitraums 12 der Fall. Die Länge des Detektionsintervalls 11 wird somit vergrößert und von der ersten Zeitdauer t1, also von dem Anfangswert, auf eine zweite Zeitdauer t2 gesetzt. So wird das Detektionsintervall 11 beispielsweise von dem Anfangswert von 250ms auf einen Wert von 500ms gesetzt, der beispielhaft der zweiten Zeitdauer t2 entspricht. Die Anweisung, das Detektionsintervall von der ersten Zeitdauer t1 auf die zweite Zeitdauer t2 zu setzen, wenn in dem Ermittlungszeitraum 12 kein Objekt zur Zugangsidentifizierung 5 detektiert wurde, ist in der Steuereinheit 2 hinterlegt.

Das Detektionsintervall 11 wird weiterhin in wiederholender Weise von der Steuereinheit 2 angesteuert. Das bedeutet, dass nun immer dann, wenn ein Zeitintervall mit der Zeitdauer t2 verstrichen ist, das Detektionssignal 10 ausgesendet wird. Das Detektionssignal 10 wird somit seltener ausgesendet.

Zu dem Ablaufzeitpunkt 20 des ersten Zeitraums 12, also mit dem Ablaufen des ersten Ermittlungszeitraums, wird ein zweiter Zeitraum 13 in der Steuereinheit 2 gestartet. Der zweite Zeitraum 13 kann z. B. maximal eine oder zwei Stunden umfassen. Der zweite Zeitraum 13 dient somit als zweiter Betriebszeitraum. Der zweite Betriebszeitraum 13 schließt sich unmittelbar an den Ermittlungszeitraum 12 an.

Wie in Figur 2 dargestellt, wird die Länge des Detektionsintervalls 11 verringert, wenn ein Objekt zur Zugangsidentifizierung 5 durch die Detektionseinheit 3 in dem zweiten Betriebszeitraum 13 detektiert wurde. Dabei wird die Länge des Detektionsintervalls 11 auf einen vorgegebenen Anfangswert zurückgesetzt, wenn ein Objekt zur Zugangsidentifizierung 5 durch die Detektionseinheit 3 detektiert wurde. Dieses gilt unmittelbar für das nächsten Detektionsintervall 11. Somit hat der zweite Betriebszeitraum 13 eine variable Länge. In Fig. 2 wird in einem bestimmten Detektionsintervall 21 der dargestellten Detektionsintervalle 11 ein Objekt zur Zugangsidentifizierung 5 in dem Erfassungsbereich der Detektionseinheit 3 detektiert. Entsprechend wird die Länge des Detektionsintervalls reduziert und in diesem Beispiel auf den Anfangswert, von z. B. 250ms, also auf den Zeitwert t1, zurückgesetzt. Es ist daher aus Figur 2 ersichtlich, dass das Detektionssignal 10 wieder häufiger ausgesendet wird, als dies nach dem Ablaufzeitpunkt 20 des ersten Zeitraums 12 der Fall war.

Bei Aussenden des nächsten Detektionssignals nach dem Detektionsintervall 21 wird erneut ein Timer gestartet und ein neuer Ermittlungszeitraum beginnt.

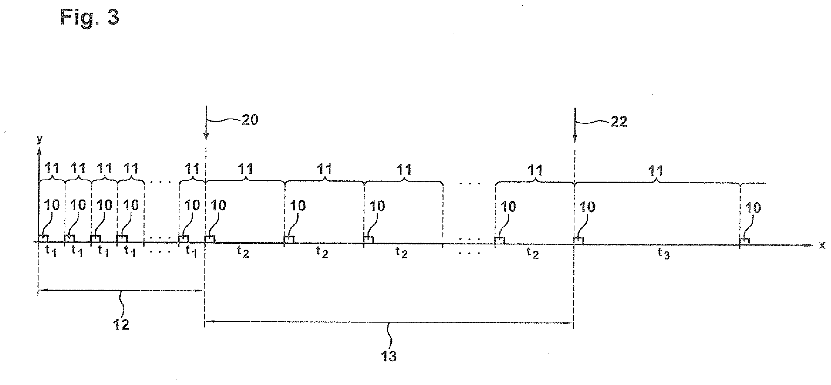

Wie aus Figur 3 erkennbar ist, handelt es sich bei dem zweiten Betriebszeitraum 13 um einen Überdeckungszeitraum 13, in dem das Detektionsintervall 11 bereits verändert wurde und, insbesondere unmittelbar, auf den Anfangswert zurückgesetzt werden kann, bei dem aber zugleich über die maximale Länge des Überdeckungszeitraums 13 die Anzahl an Objekten zur Zugangsidentifizierung 5 ermittelt wird.

Ferner ist die Steuereinheit 2 in dieser ersten Ausführungsform dazu eingerichtet, die Länge des Detektionsintervalls 11 schrittweise zu vergrößern, wobei die Länge des Detektionsintervalls 11 jeweils dann vergrößert wird, wenn ein vorgegebener zugehöriger Zeitraum 12, 13 verstrichen ist, in dem kein Objekt zur Zugangsidentifizierung 5 durch die Detektionseinheit 3 detektiert wurde. Dieses Szenario ist in Fig. 3 dargestellt, welches dem in Fig. 2 dargestellten Szenario anfänglich entspricht, wobei jedoch weder in dem ersten Zeitraum 12 noch in dem zweiten Zeitraum 13 ein Objekt zur Zugangsidentifizierung 5 in dem Erfassungsbereich der Detektionseinheit 3 detektiert wurde. Somit ist der erste Zeitraum 12 als Ermittlungszeitraum als auch der zweite Zeitraum 13 als Überdeckungszeitraum abgelaufen.

Nach Verstreichen der maximalen Länge des Überdeckungszeitraums 13, wird zu einem Ablaufzeitpunkt 22 des zweiten Betriebszeitraums 13 das Detektionsintervall 11 auf einen höheren Wert, hier auf die Zeitdauer t3, beispielsweise auf 1000ms, gesetzt. Nach Ablauf des zweiten Betriebszeitraums 13, d. h. am Zeitpunkt 22, beginnt somit ein weiterer Betriebszeitraum. Dieser weitere Betriebszeitraum endet nur dann, wenn ein Objekt zur Zugangsidentifizierung 5 detektiert wird. Diese Dauer des Detektionsintervalls 11 wird auf den Ausgangswert t1, z. B. von 250ms, zurückgesetzt, sobald ein Objekt zur Zugangsidentifizierung 5 in dem Erfassungsbereich der Detektionseinheit 3 detektiert wird, was jedoch in Fig.3 nicht dargestellt ist. Das heißt, dass der weitere Betriebszeitraum keine festgelegte Länge aufweist. Der weitere Betriebszeitraum dient als Umsetzungszeitraum.

In einem nicht dargestellten Fall, indem innerhalb des ersten Ermittlungszeitraums 12 ein Objekt zur Zugangsidentifizierung 5 detektiert wurde, behält die Steuereinheit 2 in dem Umsetzungszeitraum 13 das Detektionsintervall 11 bei. Hierbei handelt es sich dennoch um ein dynamisches Setzen, da am Zeitpunkt 20 über die Länge des Detektionsintervalls 11 entschieden wird. In diesem Fall beginnt am Zeitpunkt 20 ein erneuter Ermittlungszeitraum 12 von z. B. 1 Stunde.

Da das Detektionssignal 10 nicht kontinuierlich ausgesandt wird, ist ersichtlich, dass eine Energieersparnis eintritt, je weniger häufig das Detektionssignal 10 abgestrahlt wird. Durch eine solche erfindungsgemäße Zugangskontrolleinheit 1 mit der Steuereinheit 2 wird daher erreicht, dass das Detektionssignal 10 immer dann häufig ausgesandt wird, wenn die Zugangskontrolleinheit stark frequentiert wird. Wird über längere Zeit kein Objekt zur Zugangsidentifizierung 5 detektiert, so kann davon ausgegangen werden, dass die Zugangskontrolleinheit 1 wenig frequentiert wird. Daher kann das Detektionsintervall 11 vergrößert werden. Da ein Detektieren, ob sich ein Objekt zur Zugangsidentifizierung 5 in den Erfassungsbereich der Detektionseinheit 3 befindet, nicht möglich ist, wenn kein Detektionssignal 10 ausgesendet wird, bedeutet dies, dass ein Anwender so lange auf eine Reaktion der Zugangskontrolleinheit 1 warten muss, bis das Detektionssignal 10 wieder ausgesandt wird. Mit steigender Zeitdauer des Detektionsintervalls 11 kann es somit zu verlängerten Wartezeiten von einigen Millisekunden für einen Anwender kommen. Sobald jedoch erstmalig wieder ein Objekt zur Zugangsidentifizierung 5 in dem Erfassungsbereich der Detektionseinheit 3 detektiert wurde, reagiert die Zugangskontrolleinheit 1 wieder mit kurzer Reaktionszeit, da das Detektionsintervall 11 auf einen geringen Wert gesetzt wurde.

In einer zweiten, nicht dargestellten Ausführungsform der Erfindung wird ein alternatives Verfahren angewendet, um die Länge des Detektionsintervalls 11 zu setzen. Dabei wird eine Anzahl von detektierten Objekten zur Zugangsidentifizierung 5 über einen vorgegebenen ersten Betriebszeitraum als Ermittlungszeitraum hinweg ermittelt und die Länge des Detektionsintervalls 11 abhängig von der Anzahl der in dem vorgegebenen Ermittlungszeitraum detektierten Objekte zur Zugangsidentifizierung 5 gesetzt. Dazu wird beispielsweise jeder Wochentag in einzelne Zeitintervalle unterteilt, wobei dann jeweils eines der Zeitintervalle einen ersten Betriebszeitraum als Ermittlungszeitraum definiert.

Es wird über den oder jeden ersten Betriebszeitraum als Ermittlungszeitraum hinweg gezählt, wie oft ein Objekt zur Zugangsidentifizierung 5 in dem Erfassungsbereich der Detektionseinheit 3 detektiert wurde. Mit anderen Worten bedeutet dies, dass gezählt wird, wie oft die Zugangskontrolleinheit 1 in dem ersten Betriebszeitraum genutzt wurde. Basierend auf dieser Zahl wird die Häufigkeit der Benutzung der Zugangskontrolleinheit und somit die Häufigkeit, in der ein Objekt zur Zugangsidentifizierung 5 detektiert wurde, ermittelt. Basierend auf diesen Informationen erfolgt eine Zuordnung einer Länge des Detektionsintervalls für einen zweiten Betriebszeitraum, welcher dem ersten Betriebszeitraum zugehörig ist. So ist der zweite Betriebszeitraum beispielsweise ein dem ersten Betriebszeitraum entsprechender Tagesabschnitt eines Folgetages oder desselben Tages einer Folgewoche.

Die Steuereinheit 2 nimmt die Änderung der Detektionsintervalle 11 vor. In der Steuereinheit 2 ist hierzu eine Zuordnung hinterlegt, zu welcher Anzahl der detektierten Objekte zur Zugangsidentifizierung 5 im Ermittlungszeitraum welche Länge t1, t2 des Detektionsintervalls 11 insbesondere im zweiten Betriebszeitraum gehört.

Die Zuordnung zwischen Häufigkeit und Länge des Detektionsintervalls kann tabellarisch erfolgen, beispielsweise basierend auf einer linearen Zuordnung zwischen Häufigkeit und Länge des Detektionsintervalls oder indem eine Ober- und/oder Untergrenze an detektierten Objekten 5 im Ermittlungszeitraum einer Länge t1, t2 des Detektionsintervalls 11 zugeordnet ist. Bei einer großen Häufigkeit ein kürzeres Detektionsintervall 11 gewählt wird als bei einer geringen Häufigkeit. Die Länge des Detektionsintervalls 11 in jedem zweiten Betriebszeitraum wird somit abhängig von der Anzahl der in dem vorgegebenen ersten Betriebszeitraum detektierten Objekte zur Zugangsidentifizierung 5 gesetzt.

In dieser zweiten Ausführungsform der Erfindung wird bevorzugt die gesamte Woche in einzelne Betriebszeiträume unterteilt und für jeden dieser ersten Betriebszeiträume als Ermittlungszeitraum jeweils ein zugehöriges Detektionsintervall ermittelt. Für alle folgenden Wochen wird das Detektionsintervall 11 für den jeweilig zugehörigen zweiten Betriebszeitraum entsprechend gesetzt. Hierbei werden die Detektionsintervalle 11 beibehalten und auf dem einmal festgesetzten Wert gehalten. Somit sind die zweiten Betriebszeiträume als Umsetzungszeiträume definiert. Somit dient nur die erste Woche als Versuchszeitspanne. So wird es ermöglicht, dass die Zugangskontrolleinheit über eine Woche hinweg in einem Lernmodus betrieben wird. In der zweiten oder jeder folgenden Woche wird das Detektionsintervall 11 basierend auf den in der ersten Woche gewonnenen Informationen bezüglich der Häufigkeit, mit der ein Objekt zur Zugangsidentifizierung 5 detektiert wird, gesetzt. In weiteren bevorzugten Ausführungsformen wird diese Information von Woche zu Woche aktualisiert. Die zweiten Betriebszeiträume weisen dieselbe Länge wie die dazugehörigen Ermittlungszeiträume auf.

Für alle Ausführungsformen der Erfindung ist es vorteilhaft, wenn die Steuereinheit 2 einen zweiten Modus aufweist, in dem die Länge des Detektionsintervalls 11 auf einen festen Wert gesetzt ist. Dies kann beispielsweise durch eine Anwendereingabe erfolgen. Die Steuereinheit 2 kann alternativ in dem ersten Modus oder in dem zweiten Modus betrieben werden. Somit kann einem Anwender die Möglichkeit gegeben werden, die dynamische Einstellung des Detektionsintervalls 11 zu modifizieren, beispielsweise gemäß der ersten Ausführungsform oder gemäß der zweiten Ausführungsform zu wählen, oder diese auf ein nicht dynamisches Setzen des Detektionsintervalls 11 zu stellen.

Das Detektionsintervall 11 wird oftmals auch als "Object in Field"-Intervall, auch OIF-Intervall, bezeichnet. Erfindungsgemäß wird dieses OIF-Intervall dynamisch gesetzt, um einen Energiekonsum einzelner Komponenten, insbesondere der Funkkomponenten der Detektionseinheit 3, zu verringern. Das Detektionsintervall 11 wird dynamisch vergrößert, beispielsweise bis zu einem Maximumwert von 1s.

Dieser maximale Wert kann beispielsweise auch auf einer technischen Limitierung einzelner Komponenten gewählt werden.

Ein Anwender kann bevorzugt entweder einen festen Modus wählen, in dem das Detektionsintervall eine feste Intervalllänge hat, oder einen dynamischen Modus wählen, in dem eine dynamische sich erhöhenden Intervalllänge vorliegt. So kann der Anwender das System entweder in einem "fixed OIF"-Modus oder in einen "dynamic OIF"-Modus betreiben. In dem "fixed OIF"-Modus kann der Anwender das Detektionsintervall beispielsweise in einem Bereich zwischen 250ms und 1000ms fest einstellen. In dem "dynamic OIF"-Modus kann der Anwender den Anfangswert setzen und die Steuereinheit 2 erhöht diesen in mehreren Schritten bis auf einen maximalen Wert von beispielsweise 1000ms.

Es ist bevorzugt, dass das System per Default auf den "fixed OIF"-Modus mit dem festen Intervall von z. B. 250ms gesetzt ist. Durch das dynamische Einstellen des Detektionsintervalls 11 wird ein Energieverbrauch automatisch in einer Vielzahl von Situationen verringert, in der eine geringe Nutzungsfrequenz vorliegt, beispielsweise nachts, während Wochenenden, während Ferienzeiten oder an Feiertagen. So ist das Detektionsintervall 11 beispielsweise direkt nach einer Buchung, also nach einem Detektieren eines Objektes zur Zugangsidentifizierung 5, auf einen Wert von z. B. 250ms gesetzt, eine Stunde, nach dem keine Buchung erfolgt ist, wird das Detektionsintervall 11 auf einen Wert von z. B. 500ms erhöht und nach 2 Stunden ohne Buchung wird das Detektionsintervall 11 auf einen Wert von z. B. 1000ms erhöht.

Es wird somit ein einfacher Algorithmus geschaffen, welcher einfach zu testen ist und einem Kunden einfach zu vermitteln ist. Es ergibt sich ferner eine einfache Implementierung und es genügt im einfachsten Fall ein Timer und zumindest eine Variable, um den entsprechenden Algorithmus in eine Steuereinheit 2 zu implementieren.

Um den Stromverbrauch weiter zu optimieren, wird das OIF-Intervall an ein Benutzungsprofil angepasst. Wenn über längere Zeit kein Zutritt erfolgt, dann kann das OIF-Intervall verlängert werden. Dabei ist es auch vorteilhaft, wenn einem Anwender die Möglichkeiten zur Feinjustierung der Algorithmen geben wird. So unterscheiden sich Firmengebäude oft zwischen Arbeitstag und Wochenende. So kann beispielsweise basierend auf einer eingestellten Gebäudeart eine Zuordnung zwischen der Häufigkeit mit der detektiert wurde, dass sich ein Objekt zur Zugangsidentifizierung 5 in einem Erfassungsbereich der Detektionseinheit 3 befindet, basierend auf unterschiedlich zu wählenden Detektionsintervallen erfolgen.

Zuvor wurde eine vorteilhafte erste Ausführungsform und eine vorteilhafte zweite Ausführungsform der Erfindung beschrieben, welche im Folgenden nochmals zusammengefasst werden.

In der ersten Ausführungsform wird das OIF-Intervall wird nach einer gewissen Zeit ohne Buchung sukzessive erhöht. So ist das OIF-Intervall beispielsweise direkt nach Buchung 250ms, nach 1h ohne Buchung wird das OIF-Intervall auf 500 ms erhöht, und nach 2h ohne Buchung wird das OIF-Intervall wird auf 1000ms erhöht.

Dieses ist ein sehr einfacher "Algorithmus". Er ist einfach zu testen und dem Kunden zu erklären. Eine einfache Implementation ist möglich. Es genügt ein Timer und der Algorithmus. Es kann jedoch passieren, dass eine erste Buchung vergleichsweise langsam ist.

In der zweiten Ausführungsform wird beispielsweise ein Tag wird in 8 Zeitslots aufgeteilt: 00:00 - 03:00 / 03:00 - 06:00 / 06:00 - 09:00 / 09:00 - 12:00 / 12:00-15:00/15:00-18:00/18:00-21:00/21:00 - 00:00. Nun wird gezählt, wie viele Zutritte in jedem Zeitslot vorkommen. Dies führt beispielsweise zu diesen Zutrittszahlen 0 / 0 / 4 / 20 / 12 / 20 / 2 / 0. Dies wird nun über einen Zeitraum von einer Woche gemacht und so das Benutzerverhalten ermittelt.

Bei vielen Zutritten wird nun das OIF-Intervall auf 250ms gesetzt, bei wenigen auf höhere Werte.

Die weist den Vorteil auf, dass das Detektionsintervall 11 bereits auf "schnell" eingestellt ist, wenn der große Ansturm kommt und wird nicht erst beim ersten Zutritt erhöht wird. Die entsprechende Steuerung ist typischerweise jedoch erst nach einem Neustart nach einer Woche voll funktionsfähig. Dies kann jedoch beispielsweise dadurch kompensiert werden, dass in der ersten Woche das Verfahren gemäß der ersten Ausführungsform angewendet wird.

In den beschriebenen Ausführungsformen wird das erfindungsgemäße Verfahren durch die Steuereinheit 2 ausgeführt.

Neben der obigen schriftlichen Offenbarung wird explizit auf die Offenbarung der Figuren 1 bis 3 verwiesen.

### Bezugszeichenliste

- 1: Zugangskontrolleinheit
- 2: Steuereinheit
- 3: Detektionseinheit
- 4: Schließeinheit
- 5: Objekt zur Zugangsidentifizierung

- 10: Detektionssignal
- 11: Detektionsintervall
- 12: erster Zeitraum
- 13: zweiter Zeitraum

- 20: Ablaufzeitpunkt des ersten Zeitraums
- 21: bestimmtes Detektionsintervall
- 22: Ablaufzeitpunkt des ersten Zeitraums

## Patentansprüche

1. Zugangskontrolleinheit (1) für einen Zugang zu einem physischen Bereich, mit einer Steuereinheit (2) und mit einer Detektionseinheit (3),
wobei die Steuereinheit (2) dazu eingerichtet ist:
- die Detektionseinheit (3) zu steuern, damit die Detektionseinheit (3) ein wiederholtes Aussenden eines Detektionssignals (10) ausführt, um zu detektieren, ob sich ein Objekt zur Zugangsidentifizierung (5) in einem Erfassungsbereich der Detektionseinheit (3) befindet, wobei zwischen dem Aussenden aufeinanderfolgender Detektionssignale (10) ein Detektionsintervall (11) verstreicht,
- wobei die Steuereinheit (2) zumindest einen ersten Modus aufweist, in dem eine Länge des Detektionsintervalls (11) abhängig davon dynamisch gesetzt wird, ob ein Objekt zur Zugangsidentifizierung (5) in dem Erfassungsbereich der Detektionseinheit (3) detektiert wurde und/oder mit welcher Häufigkeit ein Objekt zur Zugangsidentifizierung (5) in dem Erfassungsbereich der Detektionseinheit (3) detektiert wurde.

2. Zugangskontrolleinheit (1) gemäß Anspruch 1, wobei die Steuereinheit (2) dazu eingerichtet ist, eine Anzahl von detektierten Objekten zur Zugangsidentifizierung (5) über einen vorgegebenen ersten Betriebszeitraum als Ermittlungszeitraum hinweg zu ermitteln und die Länge des Detektionsintervalls (11) abhängig von der Anzahl der in dem vorgegebenen Ermittlungszeitraum detektierten Objekte zur Zugangsidentifizierung (5) zu setzen.

3. Zugangskontrolleinheit (1) gemäß Anspruch 2, wobei ein dem ersten Betriebszeitraum zugehöriger zweiter Betriebszeitraum definiert ist, und die Steuereinheit (2) dazu eingerichtet ist, die Länge des Detektionsintervalls (11) in dem zweiten Betriebszeitraum abhängig von der Anzahl der in dem vorgegebenen Ermittlungszeitraum detektierten Objekte zur Zugangsidentifizierung (5) zu setzen.

4. Zugangskontrolleinheit (1) gemäß einem der vorhergehenden Ansprüche, wobei die Steuereinheit (2) dazu eingerichtet ist, die Länge des Detektionsintervalls (11), insbesondere im zweiten Betriebszeitraum, zu vergrößern, wenn über eine Zeitspanne, insbesondere über einen vorgegebenen Ermittlungszeitraum (12), hinweg weniger als eine vordefinierte Anzahl von Objekten zur Zugangsidentifizierung, insbesondere kein Objekt zur Zugangsidentifizierung (5), durch die Detektionseinheit (3) detektiert wurde.

5. Zugangskontrolleinheit (1) gemäß einem der voranstehenden Ansprüche, wobei die Steuereinheit (2) dazu eingerichtet ist, die Länge des Detektionsintervalls (11) schrittweise zu vergrößern, wobei insbesondere die Länge des Detektionsintervalls (11) jeweils dann vergrößert wird, wenn eine vorgegebene Zeitspanne, insbesondere ein vorgegebener zugehöriger Ermittlungszeitraum (12, 13), verstrichen ist, in dem weniger als eine vordefinierte Anzahl von Objekten zur Zugangsidentifizierung, insbesondere kein Objekt zur Zugangsidentifizierung (5), durch die Detektionseinheit (3) detektiert wurde.

6. Zugangskontrolleinheit (1) gemäß einem der voranstehenden Ansprüche, wobei die Steuereinheit (2) dazu eingerichtet ist, in einem Ermittlungszeitraum (12) die Anzahl der Objekte zur Zugangsidentifizierung (5) zu ermitteln, wobei abhängig von der Anzahl der in dem Ermittlungszeitraum (12) ermittelten Objekten zur Zugangsidentifizierung (5) in einem Überdeckungszeitraum (13) das Detektionsintervall (11) gegenüber dem Detektionsintervall (11) im Ermittlungszeitraum (12) verändert, insbesondere vergrößert, ist, wobei über den Überdeckungszeitraum (13) die Anzahl der Objekte zur Zugangsidentifizierung (5) ermittelt werden, wobei abhängig von der Anzahl der in dem Überdeckungszeitraum (13) ermittelten Objekten in einem weiteren Betriebszeitraum das Detektionsintervall (11) gegenüber dem Detektionsintervall (11) im Überdeckungszeitraum (13) verändert, insbesondere vergrößert, ist.

7. Zugangskontrolleinheit (1) gemäß einem der voranstehenden Ansprüche, wobei die Steuereinheit (2) dazu eingerichtet ist, die Länge des Detektionsintervalls (11), insbesondere in dem zweiten Betriebszeitraum, zu verringern, wenn mehr als eine vordefinierte Anzahl von Objekten zur Zugangsidentifizierung über den Ermittlungszeitraum oder ein Objekt zur Zugangsidentifizierung (5) durch die Detektionseinheit (3) detektiert wurde.

8. Zugangskontrolleinheit (1) gemäß einem der voranstehenden Ansprüche, wobei die Steuereinheit (2) dazu eingerichtet ist, die Länge des Detektionsintervalls (11) auf einen vordefinierten Anfangswert zurückzusetzen, wenn mehr als eine vordefinierte Anzahl von Objekten zur Zugangsidentifizierung über den Ermittlungszeitraum oder ein Objekt zur Zugangsidentifizierung (5), durch die Detektionseinheit (3) detektiert wurde.

9. Zugangskontrolleinheit (1) gemäß einem der voranstehenden Ansprüche, wobei die Steuereinheit (2) dazu eingerichtet ist, die Länge des Detektionsintervalls (11) für das nächste Detektionsintervall (11) zu verringern und/oder auf einen vordefinierten Anfangswert für das nächste Detektionsintervall (11) zurückzusetzen, wenn ein Objekt der Zugangsidentifizierung (5) durch die Detektionseinheit (3) detektiert wurde, wobei insbesondere mit der Veränderung des Detektionsintervalls (11) ein Ermittlungszeitraum (12, 13) beginnt.

10. Zugangskontrolleinheit (1) gemäß einem der voranstehenden Ansprüche, wobei in der Steuereinheit (2) eine Zuordnung hinterlegt ist, zu welcher Anzahl der detektierten Objekte zur Zugangsidentifizierung (5) in einem Betriebszeitraum (12), insbesondere in einem Ermittlungszeitraum (12) oder in einem Überdeckungszeitraum (13), welche Länge des Detektionsintervalls (11), insbesondere im zweiten Betriebszeitraum (13), gehört.

11. Zugangskontrolleinheit (1) gemäß einem der vorhergehenden Ansprüche, wobei sich der zweite Betriebszeitraum (13) unmittelbar an den Ermittlungszeitraum (12) anschließt.

12. Zugangskontrolleinheit (1) gemäß einem der vorhergehenden Ansprüche, wobei der Ermittlungszeitraum (12) ein Zeitraum eines Wochentages einer ersten Woche ist und der zweite Betriebszeitraum (13) der entsprechende Zeitraum des darauffolgenden Wochentages oder des gleichen Wochentages einer auf die erste Woche folgenden zweiten Woche ist.

13. Zugangskontrolleinheit (1) gemäß einem der voranstehenden Ansprüche, wobei die Steuereinheit (2) einen zweiten Modus aufweist, in dem die Länge des Detektionsintervalls (11) auf einen festen Wert gesetzt ist.

14. Zugangskontrolleinheit (1) gemäß einem der voranstehenden Ansprüche, wobei die Steuereinheit (2) dazu ausgebildet ist, innerhalb einer Versuchszeitspanne, insbesondere einem Tag oder einer Woche, die Anzahl der detektierten Objekte zur Zugangsidentifizierung (5) zumindest innerhalb eines Ermittlungszeitraums (12) zu detektieren, und nach der Versuchszeitspanne die Länge des Detektionsintervalls (11) für den dem Ermittlungszeitraum (12) zugeordneten zweiten Betriebsraum (13) auf einen festen Wert zu setzen,
wobei insbesondere innerhalb der Versuchszeitspanne die Anzahl der detektierten Objekte zur Zugangsidentifizierung (5) in mehreren Ermittlungszeiträumen detektiert werden und jeweils zumindest ein zweiter Betriebszeitraum einem Ermittlungszeitraum zugeordnet ist, wobei nach der Versuchszeitspanne das jeweilige Detektionsintervall (11) des jeweiligen für einem Ermittlungszeitraum (12) zugeordneten zweiten Betriebszeitraums (13) auf einen festen Wert gesetzt ist.

15. Verfahren zum Betreiben einer Zugangskontrolleinheit (1) für einen Zugang zu einem physischen Bereich, insbesondere einer Zugangskontrolleinheit (1) nach einem der vorgehenden Ansprüche, umfassend:
- wiederholtes Aussenden eines Detektionssignals (10), um zu detektieren, ob sich ein Objekt zur Zugangsidentifizierung (5) in einem Erfassungsbereich einer Detektionseinheit (3) befindet, wobei zwischen dem Aussenden aufeinanderfolgender Detektionssignale (10) ein Detektionsintervall (11) verstreicht,
- wobei zumindest in einem ersten Modus eine Länge des Detektionsintervalls (11) abhängig davon dynamisch gesetzt wird, ob und/oder mit welcher Häufigkeit ein Objekt zur Zugangsidentifizierung (5) in dem Erfassungsbereich detektiert wurde.
